(19) Europäisches Patentamt / European Patent Office / Office européen des brevets

(11) **EP 4 786 611 A1**

(12) **EUROPEAN PATENT APPLICATION**
published in accordance with Art. 153(4) EPC

(43) Date of publication:
**05.08.2026 Bulletin 2026/32**

(21) Application number: **24870313.4**

(22) Date of filing: **29.08.2024**

(51) International Patent Classification (IPC):
*C21D 8/12* (2026.01)    *B23K 26/362* (2014.01)

(52) Cooperative Patent Classification (CPC):
**B23K 26/362; C21D 8/12**

(86) International application number:
**PCT/CN2024/115458**

(87) International publication number:
**WO 2025/066767 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311256574**

(71) Applicant: BAOSHAN IRON & STEEL CO., LTD.
**Shanghai 201900 (CN)**

(72) Inventors:
• **LI, Guobao**
 **Shanghai 201900 (CN)**

• **ZHAO, Zipeng**
 **Shanghai 201900 (CN)**
• **YANG, Yongjie**
 **Shanghai 201900 (CN)**
• **WU, Meihong**
 **Shanghai 201900 (CN)**
• **ZHANG, Huabing**
 **Shanghai 201900 (CN)**
• **XU, Zhanyi**
 **Shanghai 201900 (CN)**
• **LING, Chen**
 **Shanghai 201900 (CN)**

(74) Representative: **Tergau & Walkenhorst**
**Intellectual Property GmbH**
**Lurgiallee 12**
**60439 Frankfurt am Main (DE)**

(54) **LOW-IRON-LOSS HEAT-RESISTANT DOMAIN-REFINED GRAIN ORIENTED SILICON STEEL SHEET AND LASER SCRIBING METHOD THEREFOR**

(57)    The present disclosure relates to a low-iron-loss heat-resistant magnetic-domain refined grain-oriented silicon steel sheet having at least one scribed region formed by laser scribing on the surface thereof; a molten solidified layer in the scribed region has a depth of 8-30 $\mu$m, the molten solidified layer in the scribed region has a width of 20-100 $\mu$m, and a surface protrusion in the scribed region has a height $S_a$ of $\leq$3.0 $\mu$m. The present disclosure further relates to a method for laser scribing a grain-oriented silicon steel sheet, comprising: performing laser scribing on the surface of the grain-oriented silicon steel sheet by a laser having an annular spot to form at least one scribed region on the surface of the grain-oriented silicon steel sheet. The grain-oriented silicon steel sheet of the present disclosure has a low iron loss, a high magnetic induction, and a high stacking factor, and is particularly suitable for manufacturing high-energy-efficiency wound core transformers.

FIG. 4

EP 4 786 611 A1

**Description**

**TECHNICAL FIELD**

The present disclosure relates to a grain-oriented silicon steel sheet and a manufacturing process therefor, and in particular, to a low-iron-loss heat-resistant magnetic-domain refined grain-oriented silicon steel sheet and a laser scribing method therefor.

**BACKGROUND**

Transformer, as a basic component of power transmission system, has a reactive power loss that accounts for about 40% of the total loss of the power transmission system. In such a transformer, the iron core produced by laminating or winding grain-oriented silicon steel has a reactive power loss that accounts for about 20% of the total loss under working conditions. This loss caused by the iron core of the transformer is often referred to as iron loss.

Grain-oriented silicon steel is a ferromagnetic material, which is named after its internal grain arrangement direction, which is substantially the same as the rolling direction of the steel sheet. Within the grains of oriented silicon steel, there are magnetic domain structures caused by spontaneous magnetization of ferromagnets. The magnetic moments of each atom in each magnetic domain are spontaneously arranged in parallel to form a 180° magnetic domain, which is parallel to the easy magnetization direction of the grain {110}<100>. Adjacent magnetic domains are opposite to each other by 180°, and there is a magnetic domain wall composed of tens to hundreds of atomic layers between them. In the process of magnetization, magnetic moments in adjacent magnetic domains are arranged in the same direction through movement of the magnetic domain wall, thereby realizing magnetic conduction performance. The magnetic domain structure is the result of the principle of minimum energy action, and is also a basic factor affecting the iron loss, magnetic induction and magnetostriction properties of oriented silicon steel sheets. For oriented silicon steel sheets, due to the grain arrangement direction being in easy magnetization direction, the higher the grain orientation degree, the better the magnetic properties of the silicon steel sheets, which is manifested as higher magnetic induction and lower iron loss.

At present, the magnetic conduction performance of the silicon steel sheets is manifested as magnetic induction, which is generally represented by $B_8$, that is, a magnetic flux density (T) of a silicon steel sheet under an excitation magnetic field of 800A/m; iron loss is generally represented by $P_{17/50}$, that is, a reactive electric energy (W/kg) consumed by magnetization of a silicon steel sheet when magnetic flux density in the steel sheet reaches 1.7T under an AC excitation field of 50Hz.

Research has showed that the iron loss of grain-oriented silicon steel consists of three parts: hysteresis loss, eddy current loss and anomalous eddy current loss. The hysteresis loss is an energy loss caused by hysteresis phenomenon where the magnetic induction intensity lags behind the change of magnetic field intensity due to that factors such as inclusions, crystal defects, and internal stress in magnetic materials hinder domain wall motion during the magnetization. The eddy current loss is an energy loss resulting from eddy current caused by local electromotive force induced by magnetic flux change during the magnetization, which is related to the conductivity and thickness of the silicon steel sheets. The anomalous eddy current loss is an energy loss caused by different structures of magnetic domains of the silicon steel sheets during the magnetization, which is mainly affected by the width of the magnetic domains.

In the current prior art, the development direction of silicon steel technology is to continuously reduce the iron loss of silicon steel materials. At present, there are three main technical directions that can be realized: 1. Metallurgical method: controlling the secondary recrystallization structure by metallurgical method, improving the grain orientation degree, and at the same time, moderately reducing the grain size, to refine the magnetic domain and reduce the iron loss; 2. Tension control: applying a high tension coating on the surface of silicon steel sheet to refine the magnetic domain and reduce the iron loss through the tension effect of the coating; 3. Surface scribing: applying linear stress or strain to the surface of silicon steel sheet by means of laser or electron beam to refine the magnetic domain and reduce the iron loss.

Among these methods, refining magnetic domains by scribing has become a main technical improvement point for grain-oriented silicon steel. In this method, refining magnetic domains can effectively reduce the anomalous eddy current loss of the grain-oriented silicon steel. At present, the technologies of scribing on the surface of the grain-oriented silicon steel to refine magnetic domains and thus reduce the iron loss of the grain-oriented silicon steel can be classified into two categories according to the effect of scribing:

(1) Scribing technique that is not resistant to stress-relief annealing: linear thermal stress regions are formed on the surface at a certain interval by means of a laser, a plasma beam, or an electron beam. The stress results in 90° magnetic domains perpendicular to the rolling direction in the vicinity, so that the width of the 180° main magnetic domain is reduced, and the iron loss is reduced. Since the linear thermal stress disappears due to stress relief annealing, products of this type are generally used to manufacture laminated core transformers that do not require stress relief annealing, and is currently widely used in energy-saving transformers for power transmission networks;

(2) Scribing technique that is resistant to stress-relief annealing: grooves are formed by mechanical gear rollers, chemical corrosion, laser melting, etc. The free magnetic poles and the increase in surface energy are generated on both sides of the grooves, and the energy inside the crystal is redistributed, so that the width of the magnetic domains is reduced, thereby reducing the iron loss. Since the strain regions do not change after stress relief annealing, products of this type can be used to manufacture wound core transformers that require stress relief annealing.

As a transformer with better energy-saving performance, the market share of wound core transformers has expanded rapidly in recent years. Compared to laminated core transformers, wound core transformers have advantages in terms of loss, noise, and material utilization because they make full use of the excellent magnetic properties of the grain-oriented silicon steel in the rolling direction, and are particularly suitable for manufacturing small and medium-sized energy-saving transformers. However, since internal stress will be produced in the steel sheet due to winding during the manufacturing process, resulting in performance degradation, the core must undergo stress-relief annealing. The process of stress relief annealing is usually to keep the temperature at 800°C or above for not less than 2 hours in a protective atmosphere so that the magnetic properties of the silicon steel sheet can reach the best state. For the grain-oriented silicon steel sheet whose magnetic domains are refined by conventional process of generating linear stress regions with lasers or electron beams, after stress-relief annealing, the effect of refining magnetic domains disappears as the stress disappears, therefore it cannot be used in the manufacture of wound core transformers.

In order to maintain the effect of refining magnetic domains after stress relief annealing, technologies of refining magnetic domains that are resistant to stress relief annealing has been developed. In these technologies, grooves having a specific shape are formed on the surface of the silicon steel sheet by using chemical etching, mechanical pressure, and laser treatment. The presence of free magnetic poles and the increase in surface energy at the grooves redistribute the material energy, thereby reducing the width of the magnetic domain and lowering the iron loss. Since the grooves remain unchanged during stress-relief annealing, the grain-oriented silicon steel sheets produced by using these technologies can be applied to the manufacture of wound-core transformers. These technologies are collectively known as heat-resistant scribing technologies.

Currently, the production of heat-resistant scribed grain-oriented silicon steel by using laser has been realized in this field. However, problems such as melting or spattering and low production efficiency are still the difficulties in realizing laser heat-resistant scribing.

In Chinese patent application with Publication No. CN102941413A, published on February 27, 2013, and entitled "Method for Reducing Iron Loss of Grain-Oriented Silicon Steel by Multiple Laser Grooving ", the problem of spatter generation is overcome by repeated scribing using multiple low-power laser scribing. However, the repeated scribing has low efficiency and has high difficulty in repeated positioning within micro-regions, making it difficult to achieve mass production using industrial assembly lines.

## SUMMARY

One of the purposes of the present disclosure is to provide a low-iron-loss heat-resistant magnetic-domain refined grain-oriented silicon steel sheet, wherein a certain size of scribed molten solidified layer (a layer formed by melting and solidifying of the scribed part) is formed on the surface of the grain-oriented silicon steel sheet, and the molten solidified layer can produce a certain tension effect in local micro-regions, thereby enhancing the effect of refining magnetic domains, so that the iron loss of the finished grain-oriented silicon steel is low. The grain-oriented silicon steel sheet is particularly suitable for manufacturing energy-saving wound core transformers.

Therefore, the present disclosure provides a grain-oriented silicon steel sheet having at least one scribed region formed by laser scribing on the surface thereof; wherein a molten solidified layer in the scribed region has a depth of 8-30 $\mu$m, for example, 15-25 $\mu$m; the molten solidified layer in the scribed region has a width of 20-100 $\mu$m, for example, 51-92 $\mu$m; a surface protrusion in the scribed region has a height $S_a$ of $\leq$3.0 $\mu$m.

The inventors have found that by controlling the depth of the molten solidified layer formed by laser scribing in the range of 8-30 $\mu$m and the width thereof in the range of 20-100 $\mu$m, the iron loss, magnetic induction and stacking factor of the grain-oriented silicon steel sheet can be simultaneously improved. When the depth of the molten solidified layer is less than 8 $\mu$m, it is difficult to achieve the effect of refining the magnetic domains and reducing the iron loss, resulting in high iron loss of the finished grain-oriented silicon steel; when the depth of the molten solidified layer is greater than 30 $\mu$m, the magnetic induction $B_8$ of the grain-oriented silicon steel is low, and it is impossible to manufacture a high-efficiency wound core transformer. When the width of the molten solidified layer is less than 20 $\mu$m, the required focused spot size is very small, which is extremely difficult to achieve in industrial production; when the width of the solidified layer is greater than 100 $\mu$m, the heat-affected zone formed by laser scribing is very large; as a result, thermal stress warping will occur during the production process, resulting in defocusing, and the magnetic induction and stacking factor of the steel sheet will also be significantly reduced. Therefore, in the grain-oriented silicon steel sheet according to the present disclosure, the depth of the molten solidified layer in the scribed region needs to be controlled within 8-30 $\mu$m, and the width of the molten solidified layer in the scribed region needs to be controlled within 20-100 $\mu$m.

The inventors further studied the characteristics of the molten solidified layer formed by laser scribing and their correlation with the application properties of grain-oriented silicon steel. The results show that when the density of the molten solidified layer formed by laser scribing is lower than that of the steel sheet matrix, inappropriate process conditions may form small pores in the molten solidified layer, which causes a certain protrusion to form in the scribed region. When the height $S_a$ of the protrusion is higher than 3.0 $\mu$m, the stacking factor of the silicon steel sheet is significantly reduced and cannot meet the requirements of the processing technology of the wound core. Therefore, the height $S_a$ of the surface protrusion of the grain-oriented silicon steel sheet according to the present disclosure needs to be controlled to 3.0 $\mu$m or less.

In a preferred embodiment, a line roughness $R_a$ at the central position of the scribed region of the grain-oriented silicon steel sheet according to the present disclosure is $\leq$3.0 $\mu$m. When the line roughness exceeds 3.0 $\mu$m, the stacking factor of the silicon steel sheet may be reduced.

In a preferred embodiment, the grain-oriented silicon steel sheet according to the present disclosure has an insulating coating on the surface thereof, a thickness $t_c$ of the insulating coating at the central position of the scribed region is $\geq$ 0.2 $\mu$m (the upper limit of $t_c$ is not critical and can be, for example, 1.0 $\mu$m), and a sum of $t_c$ and a thickness $t_n$ of the insulating coating in a non-scribed region satisfies the following relationship: 0.8 $\mu$m $\leq t_c + t_n \leq$ 3.5 $\mu$m. When the thickness of the insulating coating is within the above range, the insulation requirements of the grain-oriented silicon steel sheet during use can be more advantageously met.

When the thickness $t_c$ of the insulating coating at the central position of the scribed region is less than 0.2$\mu$m and the sum of the thickness $t_c$ and the thickness $t_n$ of the insulating coating in the non-scribed region is less than 0.8$\mu$m, the insulation property between the grain-oriented silicon steel sheets is poor, and the core made of the grain-oriented silicon steel sheet has a risk of breakdown. When the thickness $t_c$ of the insulating coating at the central position of the scribed region is 0.2 $\mu$m or more, but the sum of the thickness $t_c$ and the thickness $t_n$ of the insulating coating in the non-scribed region exceeds 3.5$\mu$m, the stacking factor of the grain-oriented silicon steel will decrease.

In a preferred embodiment, the grain-oriented silicon steel sheet according to the present disclosure has at least two scribed regions formed by laser scribing on the surface thereof, and a spacing between the scribed regions in the rolling direction is 4-20 mm. When the spacing between the scribed regions in the rolling direction is within the above range, the effect of refining the magnetic domain by scribing can be more advantageously achieved.

In a preferred embodiment, in the case that the thickness of the grain-oriented silicon steel sheet according to the present disclosure is $\leq$0.23 mm, the grain-oriented silicon steel sheet has an iron loss $P_{17/50}$ of $\leq$0.740 W/kg and a magnetic induction $B_8$ of $\geq$1.880 T.

In a preferred embodiment, the stacking factor of the grain-oriented silicon steel sheet according to the present disclosure is $\geq$95.0%.

In addition, in view of the fact that in the conventional method of refining the magnetic domains by scribing the molten solidified layer to reduce the iron loss of grain-oriented silicon steel sheets, there are problems such as the depth of the molten pool being difficult to control and the occurrence of spatter, one of the purposes of the present disclosure is also to provide a method for laser scribing a grain-oriented silicon steel sheet. This method can form a stable molten pool during the scribing process without generating spatter.

Therefore, the present disclosure provides a method for laser scribing a grain-oriented silicon steel sheet, comprising: performing laser scribing on the surface of the grain-oriented silicon steel sheet by a laser having a annular spot to form at least one scribed region on the surface of the grain-oriented silicon steel sheet, wherein the annular spot of the laser comprises a central beam and an outer annular beam surrounding the central beam, the molten solidified layer in the scribed region has a depth of 8-30 $\mu$m, for example, 15-25 $\mu$m, the molten solidified layer in the scribed region has a width of 20-100 $\mu$m, for example, 51-92 $\mu$m, and a surface protrusion in the scribed region has a height $S_a$ of $\leq$3.0 $\mu$m.

For the grain-oriented silicon steel, the magnetic domains can be refined by scribing, thereby reducing the iron loss. Because of the magnetic domain structures inside the grains of the grain-oriented silicon steel, in the absence of external field conditions, magnetic domains inside the grain-oriented silicon steel are mainly 180° magnetic domains arranged in antiparallel. The width of a single magnetic domain can usually reach tens of microns or even several millimeters. There is a transition layer of tens to hundreds of atomic layers between adjacent magnetic domains, which is known as the magnetic domain wall. In the process of magnetization, the magnetic moments rotate under the driving of the external field, and migration of the magnetic domain walls causes adjacent magnetic domains to merge with each other, thereby realizing magnetic conduction function. At the same time, the differences in magnetic domain structures in different regions during the migration of the magnetic domain walls causes micro-eddy currents to be generated in micro-regions, thereby generating eddy current loss, which is referred to as anomalous eddy current loss $P_a$ for the grain-oriented silicon steel. It can be seen that the $P_a$ is directly related to the inherent magnetic domain structures of the grain-oriented silicon steel, and further directly related to the magnetic domain width of the grain-oriented silicon steel. Therefore, reducing the magnetic domain width can reduce the anomalous eddy current loss $P_a$.

The other two parts of the loss of the grain-oriented silicon steel, hysteresis loss $P_h$ and eddy current loss $P_e$, have

both decreased to relatively low levels due to advances in metallurgy and physics. The anomalous eddy current loss $P_a$ accounts for a relatively large proportion of the overall loss of the grain-oriented silicon steel, especially for a thin-gauge grain-oriented silicon steel with a thickness of 0.23 mm or less, the anomalous eddy current loss $P_a$ can account for 40% or more. Therefore, refining magnetic domains of a grain-oriented silicon steel by scribing, that is, reducing the magnetic domain width, can effectively reduce the anomalous eddy current loss, thereby reducing the overall iron loss of the grain-oriented silicon steel.

The laser scribing method of the present disclosure adopts an annular focused spot, which is different from the single-mode or multi-mode lasers used in the prior art. In the single-mode or multi-mode lasers used in the prior art, the energy is concentrated in the central local area. During the scribing process, in order to make the grooves or the molten solidified layer reach the depth required for magnetic domain refinement, it is necessary to achieve the laser energy with a certain penetration depth, which requires increasing the input laser energy However, this will cause a large temperature gradient in the thickness direction of the steel sheet, where the surface temperature is much higher than the melting or even evaporation temperature, thereby forming crater-shaped defects near the scribe(s). At the same time, a large amount of plasma and metal evaporation droplets are generated during the process. After scanning, as the temperature decreases, the plasma and metal droplets re-solidify on the surface near the scribe(s) to form spatters, thereby reducing the stacking factor of the steel sheet. Furthermore, after the grain-oriented silicon steel sheet is made into an iron core, the spatters may fall off due to the magnetostrictive vibration of the steel sheet, and there is a risk of breakdown of the iron core.

In order to overcome the problems of low penetration depth of energy and residual spatters on the surface in the laser scribing method in the prior art, the present disclosure adopts a laser scribing method using an annular spot, wherein the central beam scribes to form a molten pool having a certain depth, and the outer annular beam (outer ring-shaped beam) constrains the stability of the molten pool morphology and spatters, thereby avoiding the formation of crater and spatters. The molten solidified layer formed in the scribed region is controllable, so that a low-iron-loss heat-resistant magnetic-domain refined grain-oriented silicon steel can be manufactured.

In a preferred embodiment, in the laser scribing method of the present disclosure, the laser has a power density of $16\text{kW/mm}^2$ - $80\text{kW/mm}^2$. In a preferred embodiment, in the laser scribing method of the present disclosure, the power density of the laser is $38\text{kW/mm}^2$ - $80\text{kW/mm}^2$. In a preferred embodiment, in the laser scribing method of the present disclosure, the laser has a scanning speed of 60m/s - 100m/s.

In the laser scribing method of the present disclosure, the power density of the laser can be controlled between $16\text{kW/mm}^2$ and $80\text{kW/mm}^2$. When the power density of the laser is lower than the lower limit of $16\text{kW/mm}^2$, the depth of the molten solidified layer formed by the scribing may fail to reach $8\mu m$, resulting in insufficient magnetic domain refinement effect and relatively high iron loss of the finished product; When the power density of the laser is higher than the upper limit of $80\text{kW/mm}^2$, the scribing may cause a significant decrease in magnetic induction, which also cannot meet the requirements of high-efficiency transformers.

In a preferred embodiment, in the laser scribing method of the present disclosure, the energy ratio between the central beam and the outer annular beam of the annular spot of the laser is 1:1 to 9:1.

In the scribing method of the present disclosure, the ratio of the energy of the central beam to the energy of the outer annular beam can be controlled between 1:1 and 9:1, that is, the energy of the central beam accounts for 50% to 90% of the total energy. When the ratio of the energy of the central beam to the energy of the outer annular beam is lower than 1:1, the ring beam cannot exert a stable constraint effect on the molten pool, and spatter residues will be generated near the scribed region during the scribing process. When the ratio of the energy of the central beam to the energy of the outer annular beam is higher than 9:1, the energy of the annular beam is too high, where in order to achieve a sufficient magnetic domain refinement effect, it is necessary to simultaneously increase the energy of the central beam and the annular beam. Therefore, the outer annular beam itself will also form a certain amount of melten or even evaporated materials, and spatter residues will also be formed.

In a preferred embodiment, in the laser scribing method of the present disclosure, the annular spot of the laser has a diameter "a" in the rolling direction of 20 - 100 $\mu m$.

In a preferred embodiment, in the laser scribing method of the present disclosure, the annular spot of the laser has a diameter "b" in the scanning direction of the laser scribing of 1 - 10 mm.

Compared with the prior art, the grain-oriented silicon steel sheet and the laser scribing method thereof of the present disclosure have the following beneficial effects:

The grain-oriented silicon steel sheet of the present disclosure has a scribed molten solidified layer having a certain size. The molten solidified layer can produce a certain tension effect in local micro-regions, thereby achieving a better magnetic domain refinement effect, so that the iron loss of the finished grain-oriented silicon steel is low. The grain-oriented silicon steel sheet of the present disclosure is particularly suitable for manufacturing energy-saving wound core transformers.

In the laser scribing method of the present disclosure, the scribing is performed using a laser with an annular focused spot, the scribe(s) is/are formed on the surface of the steel sheet in a single scan, efficiently achieving the depth of the molten solidified layer required for reducing iron loss, without generating spatters. The silicon steel sheet manufactured by the method of the present disclosure has low iron loss, high magnetic induction, and high stacking factor, and is particularly suitable for manufacturing high-efficiency wound core transformers.

**BRIEF DESCRIPTION OF THE DRAWINGS**

FIG. 1 schematically shows the energy distribution of an annular focused spot.

FIG. 2 schematically shows a plurality of scribed regions (a plurality of linear scribes) on the surface of a grain-oriented silicon steel sheet according to an embodiment of the present disclosure.

FIG. 3 schematically shows ascribed region and a $S_a$ and $R_a$ measurement area on the surface of a grain-oriented silicon steel sheet according to an embodiment of the present disclosure.

FIG. 4 schematically shows a molten solidified layer and an insulating coating in a scribed region on the surface of a grain-oriented silicon steel sheet according to an embodiment of the present disclosure.

**DETAILED DESCRIPTION**

The grain-oriented silicon steel sheet and the laser scribing method therefor of the present disclosure will be further explained and described below with reference to drawings and specific examples. However, the explanation and description do not constitute improper limitations on the technical solutions of the present disclosure.

Unless otherwise defined, all technical and scientific terms used herein have the same meaning as commonly understood by those skilled in the art to which the present disclosure belongs.

Herein, the molten solidified layer refers to a layer formed by forming a scribe on the surface of a silicon steel sheet and then allowing the scribed portion to melt and solidify.

Herein, the line roughness $R_a$ is an arithmetic mean roughness, wherein the measurement method is carried out according to ISO 25178, and the measuring equipment is a laser confocal microscope.

Herein, the stacking factor of the grain-oriented silicon steel sheet is measured according to GB/T 19289-2003 "Methods of measurement of resistivity, density and stacking factor of electrical steel strip and sheet".

Herein, the height $S_a$ of the protrusion, the line roughness $R_a$, and the thickness of the insulating coating in the scribed region are all the average values measured in an area with a length of 100 $\mu$m in the scanning direction of the laser scribing. The thickness of the insulating coating in the non-scribed region is an average value measured at any position with an area of 100 $\mu m^2$ in the non-scribed region.

Herein, magnetic induction ($B_8$) refers to the magnetic flux density of the silicon steel sheet under an excitation magnetic field of 800 A/m, in T.

Herein, iron loss ($P_{17/50}$) refers to a reactive electrical energy consumed by magnetization of the silicon steel sheet when the magnetic flux density reaches 1.7 T under an AC excitation field of 50 Hz, in W/kg.

Herein, magnetic induction ($B_8$) and iron loss ($P_{17/50}$) are measured using the Epstein method.

It should be noted that the laser scribing of the present disclosure can be performed before decarburization annealing, after decarburization annealing, before final hot stretching and leveling annealing, or before and after final hot stretching and leveling annealing during the manufacturing process of grain-oriented silicon steel.

There is no particular limitation on the laser source used in the method of the present disclosure. For example, a continuous laser with a wavelength of 1066 nm commonly used in this field can be used, or a pulsed laser can be used.

The technical solutions of the present disclosure and the beneficial effects thereof will be further described below with reference to specific examples.

**Examples 1-6 and Comparative Example 1**

The grain-oriented silicon steel sheets in Examples 1-6 and Comparative Example 1 were prepared by the following steps:

(1) Ironmaking, steelmaking, continuous casting, and hot rolling were performed; Next, single cold rolling was performed to roll the steel to a final thickness of 0.22 mm. The chemical composition of the grain-oriented silicon steel sheet was as follows: C: 0.07%, Si: 3.25%, Mn: 0.2%, S: 0.025%, P: 0.05%, Als: 0.05%, Cu: 0.05%, N: 0.008%, with the balance being Fe and unavoidable impurities. It should be noted that the above chemical composition of the grain-oriented silicon steel sheet is only an example, and other component ratios can also be used.

(2) Decarburization annealing at 850°C was performed and a surface oxide layer was formed. Then, the steel sheet was coated with MgO separator on the surface, and then was made into a steel coil.

(3) After the steel coil was made, the steel coil was kept at a high-temperature annealing condition of 1200°C for 20 hours.

(4) Unreacted residual MgO on the surface was cleaned, and the steel coil was dried.

(5) A laser having an annular spot was used to scan the surface of the steel sheet along its transverse direction to perform laser scribing (specific parameters for laser scribing process are listed in Table 1).

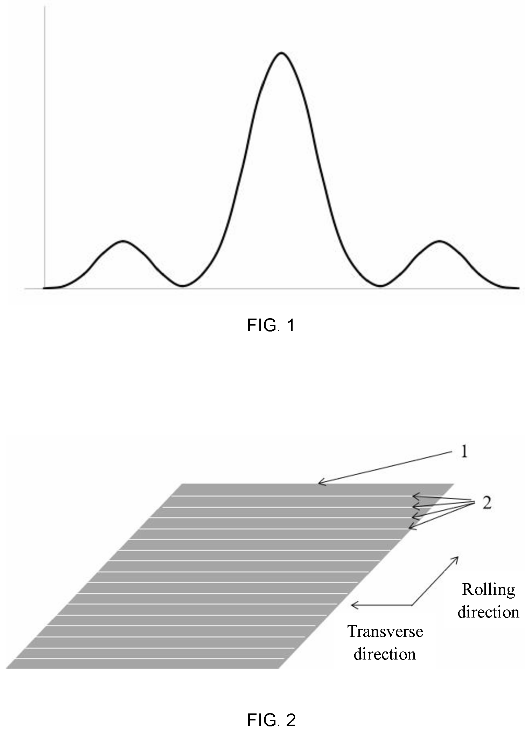

In Example 1-6, a continuous single-mode laser with a wavelength of 1066nm was modulated by an optical fiber to form an annular laser, which was transmitted to the laser head and formed an annular spot on the surface of the steel sheet after passing through a focusing mirror and a scanning mirror. The laser output power and the energy ratio of the central beam and the outer annular beam were adjusted, and the steel sheet was scanned along its transverse direction to form each scribed region. The spacing between adjacent scribed regions in the rolling direction was 5mm. FIG. 1 schematically shows the energy distribution of the annular focused spot.

Different from Examples 1-6, in Comparative Example 1, a conventional single-mode high-power continuous laser was used for scribing, without optical fiber modulation to form annular spot.

(6) Finally, an insulating coating was applied on the surface of the steel sheet, and then final annealing was performed so that the thickness $t_c$ of the coating at the central position of the scribed region was 0.5 $\mu$m, and the thickness $t_n$ of the coating in the non-scribed region was 1.0 $\mu$m.

FIG. 2 schematically shows a plurality of scribed regions (a plurality of linear scribes) on the surface of a grain-oriented silicon steel sheet according to an embodiment of the present disclosure.

As shown in FIG. 2, a laser with annular spot was used to scan the surface of the grain-oriented silicon steel sheet 1 along the transverse direction to perform laser scribing, thereby obtaining several scribed lines (i.e., scribed regions) 2 arranged in sequence along the rolling direction, and there was a spacing between each scribed region 2 in the rolling direction.

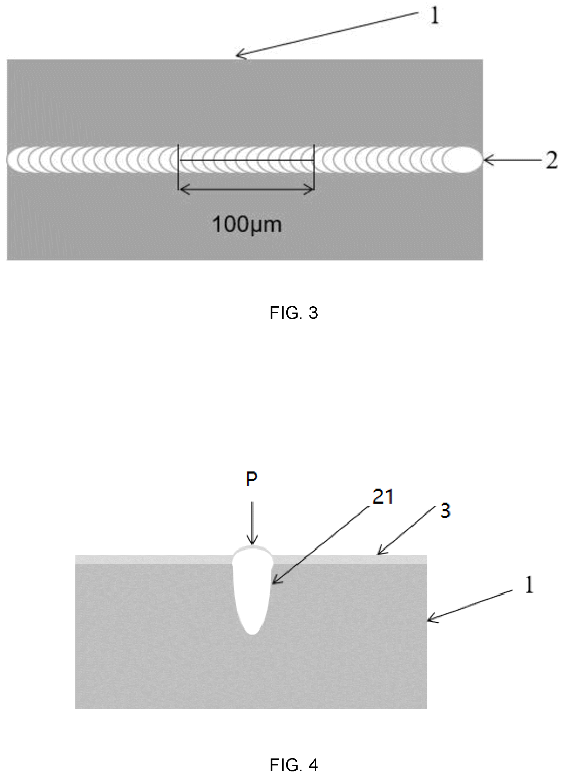

FIG. 3 schematically shows a scribed region 2 and a $S_a$ and $R_a$ measurement area (an area with a length of 100 $\mu$m) on the surface of a grain-oriented silicon steel sheet according to an embodiment of the present disclosure.

FIG. 4 schematically shows a molten solidified layer 21 and an insulating coating 3 in a scribed region on the surface of a grain-oriented silicon steel sheet according to an embodiment of the present disclosure. "P" in FIG. 4 indicates the central position of the scribed region.

Next, the magnetic property ($B_8$) and iron loss ($P_{17/50}$) of the grain-oriented silicon steel sheets of Examples 1-6 and Comparative Example 1 were tested. Specifically, the magnetic flux density of the grain-oriented silicon steel under an excitation magnetic field of 800A/m was tested by the Epstein method to obtain the $B_8$ value, with the unit of T; The reactive electric energy consumed by magnetization of the grain-oriented silicon steel when the magnetic flux density reached 1.7T under an AC excitation magnetic field of 50Hz was tested by the Epstein method to obtain the $P_{17/50}$ value, with the unit of W/kg.

Next, after the scribing was completed, the stacking factors of the grain-oriented silicon steel sheets of Examples 1-6 and Comparative Example 1 were also tested. Specifically, the stacking factors of the finished steel sheets of Examples 1-6 and Comparative Example 1 after scribing were measured using the method described in GB/T 19289-2003 "Methods of measurement of resistivity, density and stacking factor of electrical steel strip and sheet ". The test results of the grain-oriented silicon steel sheets of Examples 1-6 and Comparative Example 1 after scribing are shown in Table 1.

Table 1.

| Serial Number | Laser power density (KW/mm²) | Diameter a of annular spot in rolling direction (μm) | Diameter b of annular spot in scribing scanning direction (mm) | Center beam / outer annular beam energy ratio | Scanning speed (m/s) | Depth of molten solidified layer (μm) | Width of molten solidified layer (μm) | Height Sₐ of protrusion in scribed region (μm) | Line roughness Rₐ at central position (μm) | P₁₇/₅₀ (W/kg) | B₈ (T) | Stacking factor |
|---|---|---|---|---|---|---|---|---|---|---|---|---|
| Example 1 | 80 | 90 | 2 | 9.0 | 60 | 30 | 92 | 3 | 3 | 0.692 | 1.892 | 95.0% |
| Example 2 | 16 | 80 | 2 | 9.0 | 80 | 8 | 86 | 3 | 0.8 | 0.739 | 1.912 | 95.8% |
| Example 3 | 64 | 50 | 2 | 1.5 | 100 | 25 | 51 | 2.3 | 2 | 0.713 | 1.905 | 95.3% |
| Example 4 | 51 | 30 | 5 | 1.0 | 80 | 20 | 31 | 2.1 | 2.1 | 0.718 | 1.908 | 95.4% |
| Example 5 | 38 | 100 | 1 | 4.0 | 80 | 9 | 100 | 1.5 | 1 | 0.740 | 1.930 | 96.0% |
| Example 6 | 38 | 20 | 10 | 4.0 | 80 | 15 | 20 | 1.8 | 2 | 0.725 | 1.915 | 95.7% |
| Comparative Example 1 | 64 | / | / | / | 100 | 9 | 100 | **6.6** | **4.8** | **0.755** | 1.918 | **92.7%** |

It can be seen from Table 1 above that in Examples 1-6, all the grain-oriented silicon steel sheets (thickness: 0.22 mm) have an iron loss $P_{17/50}$ of 0.74 W/kg or less, a magnetic induction $B_8$ of greater than 1.89 T and a stacking factor of greater than 95%, thereby achieving excellent performance of low iron loss, high magnetic induction and high stacking factor.

In contrast, in Comparative Example 1, the protrusion height and the line roughness of the melt-solidified zone in the scribed region are all significantly higher than those of Examples 1-6, the iron loss is relatively high, and the stacking factor is low.

**Examples 7-12 and Comparative Example 2**

The grain-oriented silicon steel sheets of Examples 7-12 and Comparative Example 2 were prepared by the following steps:

(1) Ironmaking, steelmaking, continuous casting, and hot rolling were performed; Next, single cold rolling was performed to roll the steel to a final thickness of 0.19 mm. The chemical composition of the grain-oriented silicon steel sheet was as follows: C: 0.06%, Si: 3.45%, Mn: 0.1%, S: 0.025%, P: 0.05%, Als: 0.027%, Cu: 0.2%, N: 0.008%, with the balance being Fe and unavoidable impurities. It should be noted that the above chemical composition of the grain-oriented silicon steel sheet is only an example, and other component ratios can also be used.

(2) After alkaline cleaning and degreasing to remove residual rolling oil on the surface, a laser with a annular spot was used to scan the surface of the steel sheet along its transverse direction to perform laser scribing (specific parameters for laser scribing process are listed in Table 2).

In Examples 7-12, a continuous single-mode laser with a wavelength of 1066 nm was modulated by an optical fiber to form an annular laser, which was transmitted to the laser head and formed an annular spot on the surface of the steel sheet after passing through a focusing mirror and a scanning mirror. The laser output power and the energy ratio of the central beam and the outer annular beam were adjusted, and the steel sheet was scanned along its transverse direction to form each scribed region. The spacing between adjacent scribed regions in the rolling direction was 6 mm.

(3) Decarburization annealing at 850°C was performed and a surface oxide layer was formed. Then, the steel sheet was coated with MgO separator on the surface, and then was made into a steel coil.

(4) After the steel coil was made, the steel coil was kept at a high-temperature annealing condition of 1200°C for 20 hours.

(5) Unreacted residual MgO on the surface was cleaned, and the steel coil was dried. Next, an insulating coating was applied on the surface of the steel sheet, and then final annealing was performed so that the thickness $t_c$ of the coating at the central position of the scribed region was 0.3 $\mu$m, and the thickness $t_n$ of the coating in the non-scribed region was 1.0 $\mu$m.

Next, after the scribing was completed, the magnetic property ($B_8$) and iron loss ($P_{17/50}$) of the grain-oriented silicon steel sheets of Examples 7-12 and Comparative Example 2 were tested. Specifically, the magnetic flux density of the grain-oriented silicon steel under an excitation magnetic field of 800 A/m was tested by the Epstein method to obtain the $B_8$ value, with the unit of T; The reactive electric energy consumed by magnetization of the grain-oriented silicon steel when the magnetic flux density reached 1.7T under an AC excitation magnetic field of 50 Hz was tested by the Epstein method to obtain the $P_{17/50}$ value, with the unit of W/kg.

Next, after the scribing was completed, the stacking factors of the grain-oriented silicon steel sheets of Examples 7-12 and Comparative Example 2 were also tested. Specifically, the stacking factors of the finished steel sheets of Examples 7-12 and Comparative Example 2 after scribing were measured using the method described in GB/T 19289-2003 "Methods of measurement of resistivity, density and stacking factor of electrical steel strip and sheet ". The test results of the grain-oriented silicon steel sheets of Examples 7-12 and Comparative Example 2 after scribing are shown in Table 2.

Table 2.

| Serial Number | Laser power density (KW/mm$^2$) | Diameter a of annular spot in rolling direction ($\mu$m) | Diameter b of annular spot in scribing scanning direction (mm) | Center beam / outer annular beam energy ratio | Scanning speed (m/s) | Depth of molten solidified layer ($\mu$m) | Width of molten solidified layer ($\mu$m) | Height $S_a$ of protrusion in scribed region ($\mu$m) | Line roughness $R_a$ at central position ($\mu$m) | $P_{17/50}$ (W/kg) | $B_8$ (T) | Stacking factor |
|---|---|---|---|---|---|---|---|---|---|---|---|---|
| Example 7 | 80 | 90 | 2 | 9.0 | 60 | 30 | 92 | 3 | 3 | 0.652 | 1.892 | 95.0% |
| Example 8 | 16 | 80 | 2 | 9.0 | 80 | 8 | 85 | 3 | 0.8 | 0.700 | 1.912 | 95.8% |
| Example 9 | 64 | 50 | 2 | 1.5 | 100 | 25 | 51 | 2.3 | 2 | 0.673 | 1.905 | 95.0% |
| Example 10 | 51 | 30 | 5 | 1.0 | 80 | 20 | 31 | 2.1 | 2.1 | 0.682 | 1.908 | 95.0% |
| Example 11 | 38 | 100 | 1 | 4.0 | 80 | 9 | 100 | 1.5 | 1 | 0.704 | 1.930 | 96.0% |
| Example 12 | 38 | 20 | 10 | 4.0 | 80 | 15 | 20 | 1.8 | 2 | 0.695 | 1.915 | 95.5% |
| Comparative Example 2 | 64 | / | / | *I* | 100 | 9 | 100 | **6.6** | **4.8** | 0.725 | 1.918 | **92.6%** |

It can be seen from Table 2 above that in Examples 7-12, all the grain-oriented silicon steel sheets (thickness: 0.19 mm) have an iron loss $P_{17/50}$ of 0.704 W/kg or less, a magnetic induction $B_8$ of greater than 1.89 T and a stacking factor of greater than 95%, thereby achieving excellent performance of low iron loss and high stacking factor.

In contrast, in Comparative Example 2, the protrusion height and the line roughness in the scribed region are all significantly higher, and the stacking factor of the finished product is significantly reduced.

## Examples 13-16 and Comparative Examples 3-5

The grain-oriented silicon steel sheets of Examples 13-16 and Comparative Examples 3-5 were prepared by the following steps:

(1) Ironmaking, steelmaking, continuous casting, and hot rolling were performed; Next, single cold rolling was performed to roll the steel to a final thickness of 0.225 mm. The chemical composition of the grain-oriented silicon steel sheet was as follows: C: 0.045%, Si: 3.25%, Mn: 0.2%, S: 0.015%, Als: 0.025%, Cu: 0.07%, N: 0.008%, with the balance being Fe and unavoidable impurities. It should be noted that the above chemical composition of the grain-oriented silicon steel sheet is only an example, and other component ratios can also be used.

(2) Decarburization annealing at 860°C was performed and a surface oxide layer was formed. Then, the steel sheet was coated with MgO separator on the surface.

(3) After the steel coil was made, the steel coil was kept at a high-temperature annealing condition of 1200°C for 20 hours.

(4) Unreacted residual MgO on the surface was cleaned, and the steel coil was dried.

(5) A laser having an annular spot was used to scan the surface of the steel sheet along its transverse direction to perform laser scribing (specific parameters for laser scribing process are listed in Table 3).

In Examples 13-16 and Comparative Examples 3-5, a continuous single-mode laser with a wavelength of 1066nm was modulated by an optical fiber to form an annular laser, which was transmitted to the laser head and formed an annular spot on the surface of the steel sheet after passing through a focusing mirror and a scanning mirror. The laser output power and the energy ratio of the central beam and the outer annular beam were adjusted, and the steel sheet was scanned along its transverse direction to form each scribed region. The spacing between adjacent scribed regions in the rolling direction was 5mm.

(6) Finally, an insulating coating was applied on the surface of the steel sheet, and then final annealing was performed. The specific parameters of the applied insulating coating are listed in Table 4.

Table 3.

| Laser power density (KW/mm²) | Diameter a of annular spot in rolling direction (μm) | Diameter b of annular spot in scribing scanning direction (mm) | Center beam / outer annular beam energy ratio | Scanning speed (m/s) | Depth of molten solidified layer (μm) | Width of molten solidified layer (μm) | Height $S_a$ of protrusion in scribed region (μm) | Line roughness $R_a$ at central position (μm) |
|---|---|---|---|---|---|---|---|---|
| 40 | 80 | 2 | 4.0 | 80 | 16 | 82 | 1.3 | 2.0 |

Next, after the scribing was completed, the magnetic property ($B_8$) and iron loss ($P_{17/50}$) of the grain-oriented silicon steel sheets of Examples 13-16 and Comparative Examples 3-5 were tested. Specifically, the magnetic flux density of the grain-oriented silicon steel under an excitation magnetic field of 800 A/m was tested by the Epstein method to obtain the $B_8$ value, with the unit of T; The reactive electric energy consumed by magnetization of the grain-oriented silicon steel when the magnetic flux density reached 1.7 T under an AC excitation magnetic field of 50 Hz was tested by the Epstein method to obtain the $P_{17/50}$ value, with the unit of W/kg.

Next, after the scribing was completed, the stacking factors of the grain-oriented silicon steel sheets of Examples 13-16 and Comparative Examples 3-5 were also tested. Specifically, the stacking factors of the finished steel sheets of Examples 13-16 and Comparative Examples 3-5 after scribing were measured using the method described in GB/T 19289-2003 " Methods of measurement of resistivity, density and stacking factor of electrical steel strip and sheet".

In addition, insulation property evaluation was carried out on Examples 13-16 and Comparative Examples 3-5 with insulating coatings applied. The evaluation method referred to GB/T 2522-2007 "Methods of test for the determination of surface insulation resistance and coating adhesion of electric steel sheet and strip", and the average interlayer resistance of the double-sided coatings was used as the base. Sample sheets with an average interlayer resistance of $\leq$ 30$\Omega \cdot$m were deemed to have poor insulation property and recorded as "$\times$", and the transformer cores made from such sheets are at risk of breakdown during service.; Sample sheets with an average interlayer resistance of >30$\Omega \cdot$m were deemed to have good insulation property and recorded as "$\bigcirc$", which can meet the requirements for manufacturing energy-saving transformer cores.

All the above test results are listed in Table 4.

Table 4.

| Serial Number | Thickness $t_c$ of insulating coating at central position of scribed region ($\mu$m) | Thickness $t_n$ of coating in non-scribed region ($\mu$m) | Sum of coating thickness $t_c + t_n$ ($\mu$m) | $P_{17/50}$ (W/kg) | $B_8$ (T) | Stacking factor | Insulation evaluation |
|---|---|---|---|---|---|---|---|
| Example 13 | 0.2 | 0.6 | 0.8 | 0.693 | 1.902 | 95.5% | $\bigcirc$ |
| Example 14 | 0.3 | 0.5 | 0.8 | 0.701 | 1.905 | 96.0% | $\bigcirc$ |
| Example 15 | 0.3 | 1 | 1.3 | 0.690 | 1.901 | 95.6% | $\bigcirc$ |
| Example 16 | 0.5 | 3 | 3.5 | 0.685 | 1.901 | 95.0% | $\bigcirc$ |
| Comparative Example 3 | **_0.1_** | 1 | 1.1 | 0.696 | 1.900 | 95.4% | $\times$ |
| Comparative Example 4 | 0.3 | 0.4 | **_0.7_** | 0.695 | 1.903 | 95.9% | $\times$ |
| Comparative Example 5 | 0.6 | 3 | **_3.6_** | 0.689 | 1.904 | **94.7%** | $\bigcirc$ |

As can be seen from Table 4, the insulation properties of Examples 13-16 are good. In contrast, Comparative Examples 3 and 4 exhibit poor insulation property, leading to safety risks during the service of transformers. The stacking factor of the finished product in Comparative Example 5 is low.

All publications, patent applications, patents, and other references mentioned in the present disclosure are incorporated herein by reference in their entirety.

Although the present disclosure has been illustrated and described with reference to certain preferred embodiments thereof, it should be understood by those skilled in the art that the above contents are further detailed descriptions of the present disclosure in conjunction with specific embodiments and should not be construed as limiting the specific implementation of the present disclosure to these descriptions. Those skilled in the art can make various changes in formality and details, including making several simple deductions or substitutions, without departing from the spirit and scope of the present disclosure.

**Claims**

1.   A grain-oriented silicon steel sheet having at least one scribed region formed by laser scribing on the surface thereof, wherein a molten solidified layer in the scribed region has a depth of 8-30 $\mu$m, the molten solidified layer in the scribed region has a width of 20-100 $\mu$m, and a surface protrusion in the scribed region has a height $S_a$ of $\leq$3.0 $\mu$m.

2.   The grain-oriented silicon steel sheet according to claim 1, wherein a line roughness $R_a$ at the central position of the scribed region is $\leq$ 3.0 $\mu$m.

3.   The grain-oriented silicon steel sheet according to claim 1 or 2, wherein the grain-oriented silicon steel sheet has an insulating coating on the surface thereof, a thickness $t_c$ of the insulating coating at the central position of the scribed region is $\geq$ 0.2 $\mu$m, and a sum of $t_c$ and a thickness $t_n$ of the insulating coating in a non-scribed region satisfies the following relationship:

$$0.8\mu m \leq t_c + t_n \leq 3.5\mu m.$$

4. The grain-oriented silicon steel sheet according to any one of claims 1 to 3, wherein the grain-oriented silicon steel sheet has at least two scribed regions formed by laser scribing on the surface thereof, and a spacing between the scribed regions in a rolling direction is 4-20 mm.

5. The grain-oriented silicon steel sheet according to any one of claims 1 to 4, wherein the grain-oriented silicon steel sheet has a stacking factor of $\geq 95.0\%$.

6. The grain-oriented silicon steel sheet according to any one of claims 1 to 5, wherein, in the cast that the grain-oriented silicon steel sheet has a thickness of 0.23 mm or more, the grain-oriented silicon steel sheet has an iron loss $P_{17/50}$ of $\leq 0.740$ W/kg and a magnetic induction $B_8$ of $\geq 1.880$ T.

7. A method for laser scribing a grain-oriented silicon steel sheet, comprising: performing laser scribing on the surface of the grain-oriented silicon steel sheet by a laser having an annular spot to form at least one scribed region on the surface of the grain-oriented silicon steel sheet, wherein the annular spot of the laser comprises a central beam and an outer annular beam surrounding the central beam, a molten solidified layer in the scribed region has a depth of 8-30 $\mu$m, the molten solidified layer in the scribed region has a width of 20-100 $\mu$m, and a surface protrusion in the scribed region has a height $S_a$ of $\leq 3.0$ $\mu$m;

   preferably, a line roughness $R_a$ at the central position of the scribed region is $\leq 3.0$ $\mu$m;
   preferably, the grain-oriented silicon steel sheet has an insulating coating on the surface thereof, a thickness $t_c$ of the insulating coating at the central position of the scribed region is $\geq 0.2$ $\mu$m, and a sum of $t_c$ and a thickness $t_n$ of the insulating coating in a non-scribed region satisfies the following relationship: $0.8\mu m \leq t_c + t_n \leq 3.5\mu m$.
   preferably, the grain-oriented silicon steel sheet has at least two scribed regions formed by laser scribing on the surface thereof, and a spacing between the scribed regions in a rolling direction is 4-20 mm;
   preferably, the grain-oriented silicon steel sheet has a stacking factor of $\geq 95.0\%$.

8. The method according to claim 7, wherein the laser has a power density of 16kW/mm$^2$ - 80kW/mm$^2$; and/or the laser has a scanning speed of 60m/s - 100m/s.

9. The method according to claim 7 or 8, wherein an energy ratio between the central beam and the outer annular beam of the annular spot of the laser is 1:1 to 9:1.

10. The method according to any one of claims 7 to 9, wherein the annular spot of the laser has a diameter a in a rolling direction of 20 - 100 $\mu$m.

11. The method according to any one of claims 7 to 10, wherein the annular spot of the laser has a diameter b in a scanning direction of laser scribing of 1 - 10 mm.

FIG. 1

FIG. 2

FIG. 3

FIG. 4

## INTERNATIONAL SEARCH REPORT

| International application No. |
| --- |
| **PCT/CN2024/115458** |

**A.    CLASSIFICATION OF SUBJECT MATTER**

C21D 8/12(2006.01)i;  B23K 26/362(2014.01)i

According to International Patent Classification (IPC) or to both national classification and IPC

**B.    FIELDS SEARCHED**

Minimum documentation searched (classification system followed by classification symbols)

IPC:  C21D B23K

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; ISI_WEB OF SCIENCE; 万方, WANFANG; 超星读秀, DUXIU; 宝山钢铁, 硅钢, 电工钢, 电磁, 激光, 环, 中央, 中心, 光斑, 光束, 熔融, 熔化, 重熔, 高度, 深度, 宽度, 绝缘涂层, 张力涂层, 厚度, 膜厚, silicon steel, electrical steel, electromagnetic, laser, ring, central, spot, beam, melt, remelt, height, depth, width, insulation coating, tension coating, thickness

**C.    DOCUMENTS CONSIDERED TO BE RELEVANT**

| Category* | Citation of document, with indication, where appropriate, of the relevant passages | Relevant to claim No. |
| --- | --- | --- |
| X | CN 115917020 A (JFE STEEL CORP.) 04 April 2023 (2023-04-04)<br>description, paragraphs 29-36 and 60-64 | 1, 2, 4-6 |
| X | WO 2023132251 A1 (JFE STEEL CORP.) 13 July 2023 (2023-07-13)<br>description, paragraphs 41-59, 70, and 73 | 1, 2, 4-6 |
| A | CN 1475583 A (NIPPON STEEL CORP.) 18 February 2004 (2004-02-18)<br>claims 1-4 | 1-11 |
| A | CN 114561512 A (WUHAN IRON & STEEL CO., LTD.) 31 May 2022 (2022-05-31)<br>description, paragraphs 11-33 | 1-11 |
| A | CN 114255971 A (BAOSHAN IRON & STEEL CO., LTD.) 29 March 2022 (2022-03-29)<br>description, paragraphs 17-28 | 1-11 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 October 2024** | **11 November 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/115458**

| Patent document cited in search report | | | Publication date (day/month/year) | Patent family member(s) | | | Publication date (day/month/year) |
|---|---|---|---|---|---|---|---|
| CN | 115917020 | A | 04 April 2023 | KR | 20230038271 | A | 17 March 2023 |
| | | | | US | 2023307160 | A1 | 28 September 2023 |
| | | | | JP | 7367779 | B2 | 24 October 2023 |
| | | | | WO | 2022045264 | A1 | 03 March 2022 |
| | | | | EP | 4206339 | A1 | 05 July 2023 |
| | | | | EP | 4206339 | A4 | 21 February 2024 |
| | | | | IN | 202317006597 | A | 20 October 2023 |
| WO | 2023132251 | A1 | 13 July 2023 | KR | 20240113807 | A | 23 July 2024 |
| CN | 1475583 | A | 18 February 2004 | KR | 20030094030 | A | 11 December 2003 |
| | | | | KR | 100523770 | B1 | 26 October 2005 |
| | | | | EP | 1367140 | A1 | 03 December 2003 |
| | | | | EP | 1367140 | B1 | 13 December 2006 |
| | | | | TW | 200400271 | A | 01 January 2004 |
| | | | | JP | 2004056090 | A | 19 February 2004 |
| | | | | JP | 4398666 | B2 | 13 January 2010 |
| | | | | US | 2004040629 | A1 | 04 March 2004 |
| | | | | US | 7045025 | B2 | 16 May 2006 |
| | | | | DE | 60310305 | D1 | 25 January 2007 |
| | | | | DE | 60310305 | T2 | 12 April 2007 |
| | | | | CN | 1247801 | C | 29 March 2006 |
| | | | | TW | I227739 | B | 11 February 2005 |
| CN | 114561512 | A | 31 May 2022 | CN | 114561512 | B | 05 April 2024 |
| CN | 114255971 | A | 29 March 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102941413 A

**Non-patent literature cited in the description**

- GB/T 19289-2003. *Methods of measurement of resistivity, density and stacking factor of electrical steel strip and sheet*

- GB/T 2522-2007. *Methods of test for the determination of surface insulation resistance and coating adhesion of electric steel sheet and strip*